# EUROPEAN PATENT SPECIFICATION

(11) **EP 3 399 252 B1**
(45) Date of publication and mention of the grant of the patent: **10.06.2020**
(21) Application number: 18169409.2
(22) Date of filing: 26.04.2018
(51) Int. Cl.: F24H 1/00, F02G 1/055, F02G 5/02, F23B 80/04, F24B 1/00, F23M 20/00

(54) **AN INTERNAL COMBUSTION STOVE, IN PARTICULAR OF AN IMPROVED TYPE**
INNENVERBRENNUNGSOFEN, INSBESONDERE VON VERBESSERTER ART
POÊLE À COMBUSTION INTERNE, EN PARTICULIER DE TYPE AMÉLIORÉ

(30) Priority: 28.04.2017 IT 201700046076
(43) Date of publication of application: 07.11.2018
(73) Proprietor: T.M.A. DI BOGLIARI S.r.l., 52100 Olmo (AR) (IT)
(72) Inventor: ANGORI, Fausto, 06061 CASTIGLION DEL LAGO (PERUGIA) (IT)
(74) Representative: Dondi, Silvia

(56) References cited:
- WO-A1-2011/068419
- WO-A1-2014/128089
- DE-A1-102006 001 299
- DE-A1-102008 057 989
- US-A1- 2007 221 205

## Description

The present invention relates to an internal combustion stove, particularly of the improved type.

Many types of stoves for heating are known that are differentiated substantially in terms of the combustible material with which they operate and for some technical peculiarities necessary for optimising the combustion of the particular combustible material destined to them.

In recent decades, last-generation stoves have become widely used that are particularly suitable for domestic use, which as combustible material include the use of biomasses and of the so-called pellets.

In greater deal, pellets are a fuel made of wood, obtained by pressing dried shavings; they are free of additives and chemical substances that are not part of the wood itself.

In this way, a fuel is obtained that delivers a high performance and the calorific power of which is, given a same volume but not a same weight, about twice that of traditional wood in blocks.

Further, the use of pellets involves a series of improvements of an ecological, energy and heating system management nature with respect to traditional stoves, without mentioning the environmental advantages, as the pellets are obtained from wood waste products.

With the purpose of maximising the previously-described advantages, the combustion of the pellets must be constantly oxygenated by forced ventilation.

Therefore, stoves are designed comprising an aeration pathway in which, using an aspirator located at the end of the pathway:
- fresh air is aspirated from the external environment,
- the air reaches the burner where the combustion takes place, the combustion being, possibly, previously activated by fire-lighting means, and in which
- the combustion fumes deriving from the combustion are forcedly aspirated through a special flue pipe which, according to the geometric characteristics of the stove, can take on different conformations with the aim of further optimising the functioning of the stove.

As generally the aspirator is of an electrical type, pellet stoves are not free of drawbacks among which the fact that in isolated places not supplied with electricity or in cases of faults in the electrical grid, they are totally non-utilisable.

To obviate this drawback, the only solution actually present on the market is total elimination of the electronic system for combustion fume expulsion, making the stove work as a traditional stove, burning pellets instead of wood.

As can be understood from the foregoing, this solution eliminates the problem of combustion fumes but penalises the performance of the stove. Further, the designers are in this way obliged to accept compromises on the dimensioning and conformation of the discharge pipes, thus losing the nature, qualities and advantages of classic pellet stoves.

There are already known pellet stoves using a Stirling engine, i.e. from WO 2014/128089, DE 102006001299 and US 2007/221205.

From WO 2011/068419 it is known a cogeneration system fed by a gas or liquid fuel such as oil or the combustion chamber may be arranged to combust a biomaterial such as wood pellets.

In DE 102008057989 it is disclosed a boiler using a Stirling engine.

A main aim of the present invention consists in the fact of realising an internal combustion stove that can obviate the above-described drawbacks.

Within the scope of this task, an aim of the present invention consists in realising a completely autonomous stove which, while maintaining the typical operation of forced-air stoves and therefore high performance of the combustion of biomasses or pellets, can be used in any environment, even without electrical current available, in order to function without any need for an external energy source.

This task, as well as these and other aims that will more fully emerge in the following, are attained using an internal combustion stove, in particular of the improved type, comprising a supporting structure defining at least a combustion chamber of a combustible material for generation of heat and at least a flue pipe for the external discharge of the combustion fumes produced by the combustion of said combustible material, characterised in that it comprises an external combustion engine, which is associated with said supporting structure and the hot part of which is arranged along said flue pipe for the transfer of the heat of said combustion fumes to said hot part so as to convert at least part of the thermal energy possessed by said combustion fumes into mechanical energy by means of the operation of said external combustion engine.

Further characteristics and advantages of the invention will become more apparent from the description of a preferred but not exclusive embodiment of an internal combustion stove, in particular of an improved type, illustrated by way of indicative and non-limiting example in the appended drawings, in which:

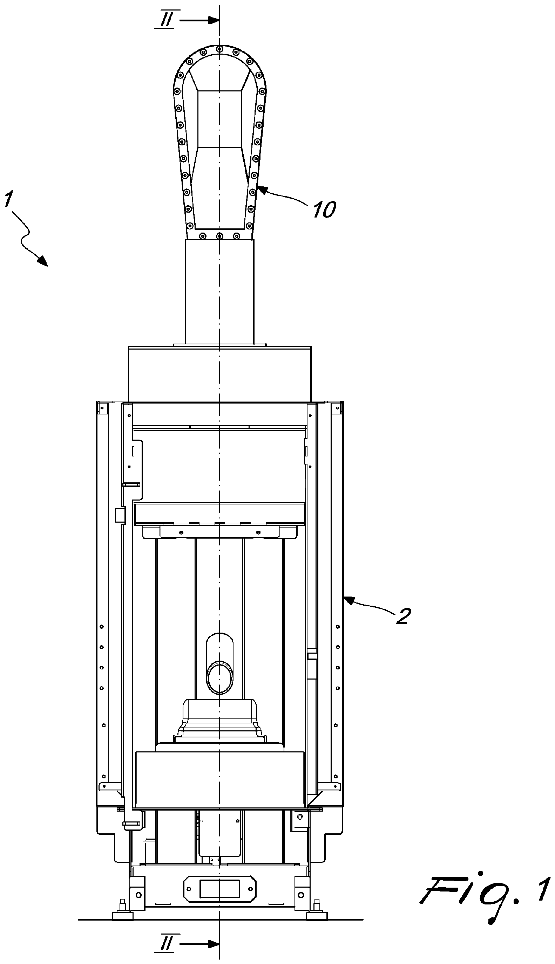

- figure 1 is a view in frontal elevation of the internal combustion stove according to the present invention;

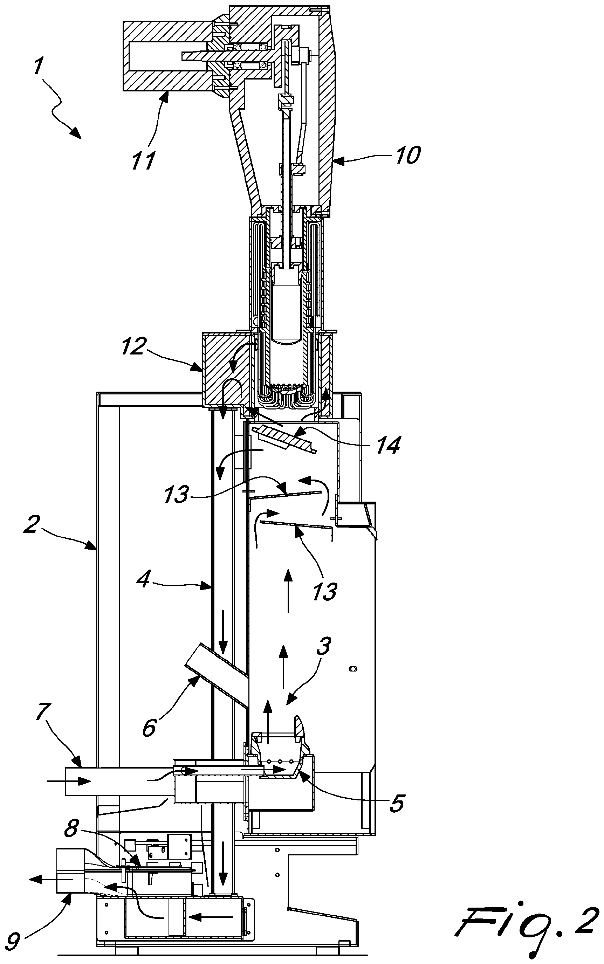

- figure 2 is a longitudinal section of the stove illustrated in figure 1 and taken along section plane II-II.

With particular reference to the figures, the internal combustion stove, in particular of the improved type, denoted in its entirety by reference numeral 1, comprises a supporting structure 2 defining at least one combustion chamber 3 of a combustible material for generating heat and at least one flue pipe 4 for the external discharge of the combustion fumes produced by the combustion of the combustible material.

In greater detail, in the illustrated embodiment, the stove 1 is characterised at least in part as a pellet stove of a traditional type.

In fact, it is constituted by a front part defining the combustion chamber internally of which a burner 5 is located in which the combustible material, i.e. the pellets, is dropped by force of gravity through a loading channel 6, and is fed through an aspiration channel 7 which takes fresh air from behind the stove 1.

Starting from the front part, the flue pipe 4 extends upwards and then in proximity of the upper end of the supporting structure 2 bends by about 180°, then to return downwards, through the rear part of the stove 1, to the feet of the stove 1 where an aspiration assembly 8 is located, for example of the electrical type, which opens towards a discharge conduit 9 so as to force expulsion of the combustion fumes.

According to the invention, an external combustion engine 10 is included, which is associated to the supporting structure 2 and the hot part of which is arranged along said flue pipe 4 for the transfer of the heat of the combustion fumes to the hot part so as to convert at least part of the thermal energy possessed by the combustion fumes into mechanical energy by means of the operation of the external combustion engine 10. Advantageously, electric current generator means 11 associated to the external combustion engine 10 for the conversion of at least part of the mechanical energy possessed by the mobile organs of the internal combustion engine 10 into electric power are also included.

The aspiration assembly 8 can advantageously be powered electrically by at least a source of energy selected from the group constituted by: an electric battery installed on-board the stove 1, an electrical grid that is external of the stove 1 and by electric current generator means 11.

In the illustrated embodiment, the external combustion engine 10 is a Stirling engine in a beta configuration of known type and therefore not described in detail.

As already mentioned, the external combustion engine 10 is advantageously installed on the supporting structure 2, so that the hot part thereof is located at a point of the flue pipe 4.

In the illustrated embodiment, the hot part is inserted in a hot chamber 12 made at the elbow bend of the flue pipe 4 in the upper part of the supporting structure 2.

In this way, a point is created in which the combustion fumes concentrate, which maximises the heat exchange between them and the hot part of the external combustion engine 10.

With the aim of further maximising the effect described in the foregoing by slowing down the combustion fumes, flow slowing means 13 are arranged along the flue pipe 4, at a point that is located upstream of the hot part of the external combustion engine 10, along the direction of travel of said combustion fumes in the flue pipe 4.

In this way, the time the combustion fumes spend in proximity of the hot part can be increased, with a consequent increase in the heat exchange between the hot part and the combustion fumes.

To complete the stove 1, heat exchanger means can be included which are associated to the cold part of said external combustion engine 10 for the transfer of at least part of the heat of the external combustion engine 10 to a cooling fluid circulating in a cooling system which is external to the stove 1.

The cooling system can advantageously be associated to the water and sanitary system of the rooms where the stove 1 is installed so that the cooling fluid can be the water circulating in said water and sanitary system. Lastly, a bypass valve 14 is included, arranged along the flue pipe 4, at a point that is located upstream of the hot part of the external combustion engine 10, along the direction of travel of the combustion fumes in the flue pipe 4, and switchable between a first position, in which the combustion fumes pass through the flue pipe 4 along its entire extension and a second position, in which the combustion fumes are intercepted and redirected to a point of the flue pipe 4 that is arranged downstream of said hot part, also along the direction of travel of the combustion fumes in the flue pipe 4.

The internal combustion stove 1 of the invention operates as follows.

At start-up the stove 1 operates as a pellet stove of a traditional type: the pellets are lit in the burner 5 possibly using an electric fire-lighter and the aspiration assembly 8 creates the depression necessary for the combustion fumes to be discharged into the discharge conduit 9.

In the hypothesis of having the bypass valve switched into its first position, the combustion fumes invade the hot chamber 12 and, thanks to a manual start-up using a crank or an electrically-assisted start-up of the external combustion engine 10, using the electric current generator means 11 which can consist of an entirely usual electrical alternator, a sufficient electric current is produced for powering the aspiration assembly 8, so as to eliminate, when running in standard use, the need for external energy sources, as well as for powering other electric utilities external of the stove 1.

At the same time the water circulating in the water and sanitary system associated to the cooling system of the external combustion engine 10 is heated.

Differently, if no electrical energy production is required, by switching the bypass valve 14 into its second position, the hot chamber 12 is isolated from the circuit of the combustion fumes so as not to supply the external combustion engine 10 and cause the stove 1 to function as a pellet stove of a traditional type.

In practice it has been noted that the internal combustion stove, in particular of the improved type, according to the invention, fully achieves the intended tasks and aims, as it enables heating an environment without any use of electrical current from the grid.

In fact, in the hypothesis of providing the stove with a battery, the battery charge can be used for the start-up steps and the energy produced by the alternator can be used for powering the aspiration assembly and recharging the battery itself.

In this way it is possible for the stove to function in any environment, locating it where most needed.

Should on the other hand the stove be connected to the grid and/or to the water and sanitary system, electrical current can be supplied to the grid and/or at the same time it can be used to heat the water for the hydro-sanitary appliances.

The internal combustion stove, in particular of the improved type, as it is conceived, is susceptible to numerous modifications and variants, all falling within the scope of the appended claims.

Furthermore, all the details can be replaced by other equivalent elements. In practice, the materials used, as well as the dimensions and shapes, may in practice be of any type according to requirements and the state of the art.

## Claims

1. An internal combustion stove (1), comprising a supporting structure (2) which forms at least one combustion chamber (3) for a combustible material for generating heat and at least one flue pipe (4) for the external discharge of the combustion fumes produced by the combustion of said combustible material; an external combustion engine (10), which is associated with said supporting structure (2) and the hot part of which is arranged along said flue pipe (4) for the transfer of the heat of said combustion fumes to said hot part so as to convert at least part of the thermal energy possessed by said combustion fumes into mechanical energy by means of the operation of said external combustion engine (10),
**characterized in that** the flue pipe (4) extends upwards and then bends by about 180° in proximity of an upper end of said supporting structure (2), then returning downwards through a rear part of said stove (1), to the feet of the stove (1), where an aspiration assembly (8) is located, the hot part of the external combustion engine (10) is inserted in a hot chamber (12) made at the 180° bend of the flue pipe (4).

2. The stove (1) according to claim 1, **characterized in that** it comprises electric current generator means (11) associated with said external combustion engine (10) for the conversion of at least part of said mechanical energy into electric power.

3. The stove (1) according to claim 1 or 2, **characterized in that** it comprises heat exchanger means which are associated with the cold part of said external combustion engine (10) for the transfer of at least part of the heat of said external combustion engine (10) to a cooling fluid which circulates in a cooling system which is external to said stove (1).

4. The stove (1) according to claim 1, **characterized in that** said cooling system can be associated with a water and sanitary system and **in that** said cooling fluid is the water that circulates in said water and sanitary system.

5. The stove (1) according to one or more of the preceding claims, **characterized in that** it comprises a bypass valve (14) that is arranged along said flue pipe (4) in a point that is located upstream of said hot part, along the direction of travel of said combustion fumes in said flue pipe (4), and can be switched between a first position, in which said combustion fumes pass through said flue pipe (4) along its entire extension, and a second position, in which said combustion fumes are intercepted and redirected to a point of said flue pipe (4) that is arranged downstream of said hot part, along the direction of travel of said combustion fumes is said flue pipe (4).

6. The stove (1) according to one or more of the preceding claims, **characterized in that** it comprises flow slowing means (13) which are arranged along said flue pipe (4) in a point that lies upstream of said hot part, along the direction of travel of said combustion fumes in said flue pipe (4), and are adapted to increase the retention time of said combustion fumes in proximity to said hot part so as to increase the exchange of heat between said combustion fumes and said hot part.

7. The stove (1) according to one or more of the preceding claims, **characterized in that** it comprises an aspiration assembly (8) for aspirating said combustion fumes.

8. The stove (1) according to claim 7, **characterized in that** said aspiration assembly (8) is of the electric type and is powered electrically by at least one energy source that is selected in the group constituted by: an electric battery installed on board said stove (1), an electrical grid that is external to said stove (1) and said electric current generator means (11).

9. The stove (1) according to one or more of the preceding claims, **characterized in that** is of the pellet type.

10. The stove (1) according to one or more of the preceding claims, **characterized in that** said external combustion engine (10) is of the Stirling type.

## Patentansprüche

1. Innenverbrennungsofen (1) umfassend eine Tragstruktur (2), die mindestens eine Verbrennungskammer (3) für ein brennbares Material zur Erzeugung von Wärme bildet und mindestens ein Rauchrohr (4) zur externen Ableitung der durch Verbrennung des brennbaren Materials erzeugten Verbrennungsgase; einen Außenverbrennungsmotor (10), der mit der Tragstruktur (2) assoziiert ist und dessen heißer Teil entlang des Rauchrohrs (4) angeordnet ist, um die Wärme der Verbrennungsgase auf den heißen Teil zu übertragen, um mindestens einen Teil der Wärmeenergie, die die Verbrennungsgase besitzen, durch den Betrieb des Außenverbrennungsmotors (10) in mechanische Energie umzuwandeln,
**dadurch gekennzeichnet, dass** sich das Rauchrohr (4) nach oben erstreckt und sich dann um etwa 180° in der Nähe von einem oberen Ende der Tragstruktur (2) biegt, dann wider nach unten durch einen hinteren Teil des Ofens (1) zu den Füßen des Ofens (1) verläuft, wo sich eine Ansauganordnung (8) befindet, der heiße Teil des Außenverbrennungsmotors (10) ist in eine heiße Kammer (12) eingesetzt, die an der 180°-Biegung des Rauchrohrs (4) ausgebildet ist.

2. Ofen (1) nach Anspruch 1, **dadurch gekennzeichnet, dass** er Stromerzeugermittel (11) umfasst, die mit dem Außenverbrennungsmotor (10) assoziiert sind, um mindestens einen Teil der mechanischen Energie in elektrischen Strom umzuwandeln.

3. Ofen (1) nach Anspruch 1 oder 2, **dadurch gekennzeichnet, dass** er Wärmetauschermittel umfasst, die mit dem kalten Teil des Außenverbrennungsmotors (10) assoziiert sind, um mindestens einen Teil der Wärme des Außenverbrennungsmotors (10) zu einem Kühlfluid zu übertragen, das in einem Kühlsystem zirkuliert, das sich außerhalb des Ofens (1) befindet.

4. Ofen (1) nach Anspruch 1, **dadurch gekennzeichnet, dass** das Kühlsystem mit einem Wasser- und Sanitärsystem assoziiert werden kann und dadurch, dass das Kühlfluid das Wasser ist, das in dem Wasser- und Sanitärsystem zirkuliert.

5. Ofen (1) nach einem oder mehreren der vorhergehenden Ansprüche, **dadurch gekennzeichnet, dass** er ein Bypassventil (14) umfasst, das entlang des Rauchrohrs (4) an einer Stelle angeordnet ist, die sich stromaufwärts des heißen Teils entlang der Bewegungsrichtung der Verbrennungsgase in dem Rauchrohr (4) befindet und zwischen einer ersten Position, in der die Verbrennungsgase durch das Rauchrohr (4) entlang ihrer gesamten Ausdehnung strömen, und einer zweiten Position umgeschaltet werden kann, in der die Verbrennungsgase abgefangen und zu einer Stelle des Rauchrohrs (4), das stromabwärts des heißen Teils angeordnet ist, entlang der Bewegungsrichtung der Verbrennungsgase im Rauchrohr (4) umgelenkt werden.

6. Ofen (1) nach einem oder mehreren der vorhergehenden Ansprüche, **dadurch gekennzeichnet, dass** er Strömungsverlangsamungsmittel (13) umfasst, die entlang des Rauchrohrs (4) an einer Stelle angeordnet sind, die stromaufwärts des heißen Teils entlang der Bewegungsrichtung der Verbrennungsgase in dem Rauchrohr (4) liegt und dazu ausgelegt sind, die Verweilzeit der Verbrennungsgase in der Nähe des heißen Teils zu erhöhen, um den Wärmeaustausch zwischen den Verbrennungsgasen und dem heißen Teil zu erhöhen.

7. Ofen (1) nach einem oder mehreren der vorhergehenden Ansprüche, **dadurch gekennzeichnet, dass** er eine Ansauganordnung (8) zum Ansaugen der Verbrennungsgase umfasst.

8. Ofen (1) nach Anspruch 7, **dadurch gekennzeichnet, dass** die Ansauganordnung (8) vom elektrischen Typ ist und durch mindestens eine Energiequelle elektrisch angetrieben wird, die in der Gruppe ausgewählt ist, bestehend aus: einer elektrischen Batterie, die an Bord des Ofens (1) installiert ist, einem elektrischen Netz, das sich außerhalb des Ofens (1) befindet und den Stromerzeugermitteln (11).

9. Ofen (1) nach einem oder mehreren der vorhergehenden Ansprüche, **dadurch gekennzeichnet, dass** er vom Pellet-Typ ist.

10. Ofen (1) nach einem oder mehreren der vorhergehenden Ansprüche, **dadurch gekennzeichnet, dass** der Außenverbrennungsmotor (10) vom Stirling-Typ ist.

## Revendications

1. Poêle à combustion interne (1), comprenant une structure de support (2) formant au moins une chambre de combustion (3) pour un matériau combustible destiné à générer de la chaleur et au moins un tuyau à bouche (4) pour l'évacuation externe des fumées de combustion produites par la combustion dudit matériau combustible; un moteur (10) à combustion externe étant associé à ladite structure de support (2) et dont la partie chaude est disposée le long dudit tuyau à bouche (4) pour le transfert de la chaleur desdites fumées de combustion à ladite partie chaude de manière à convertir au moins une partie de l'énergie thermique possédée par lesdites fumées de combustion en énergie mécanique au moyen du fonctionnement dudit moteur (10) à combustion externe,
**caractérisé en ce que** le tuyau à bouche (4) s'étend vers le haut et puis se courbe d'environ 180° à proximité d'une extrémité supérieure de ladite structure de support (2), puis revient vers le bas à travers une partie arrière dudit poêle (1), jusqu'aux pieds du poêle (1) où se trouve un ensemble d'aspiration (8), la partie chaude du moteur (10) à combustion externe est introduite dans une chambre chaude (12) réalisée en correspondance du coude à 180° du tuyau à bouche (4).

2. Poêle (1) selon la revendication 1, **caractérisé en ce qu'**il comprend des moyens générateurs (11) de courant électrique associés au dit moteur (10) à combustion externe pour la conversion d'au moins une partie de ladite énergie mécanique en puissance électrique.

3. Poêle (1) selon la revendication 1 ou 2, **caractérisé en ce qu'**il comprend des moyens échangeurs de chaleur étant associés à la partie froide dudit moteur (10) à combustion externe pour le transfert d'au moins une partie de la chaleur dudit moteur (10) à combustion externe à un fluide de refroidissement qui circule dans un système de refroidissement étant externe au dit poêle (1).

4. Poêle (1) selon la revendication 1, **caractérisé en ce que** ledit système de refroidissement peut être associé à un système d'eau et sanitaire et **en ce que** ledit fluide de refroidissement est l'eau qui circule dans ledit système d'eau et sanitaire.

5. Poêle (1) selon l'une ou plusieurs des revendications précédentes, **caractérisé en ce qu'**il comprend une vanne de dérivation (14) étant disposée le long dudit tuyau à bouche (4) en un point étant situé en amont de ladite partie chaude, le long de la direction de déplacement desdites fumées de combustion dans ledit tuyau à bouche (4), et pouvant être commutée entre une première position, dans laquelle lesdites fumées de combustion passent à travers ledit tuyau à bouche (4) sur toute son extension, et une seconde position, dans laquelle lesdites fumées de combustion sont interceptées et redirigées vers un point dudit tuyau à bouche (4) étant disposé en aval de ladite partie chaude, le long de la direction de déplacement desdites fumées de combustion dans ledit tuyau à bouche (4).

6. Poêle (1) selon l'une ou plusieurs des revendications précédentes, **caractérisé en ce qu'**il comprend des moyens de ralentissement (13) de l'écoulement étant disposés le long dudit tuyau à bouche (4) en un point se trouvant en amont de ladite partie chaude, le long de la direction de déplacement desdites fumées de combustion dans ledit tuyau à bouche (4), et étant adaptés pour augmenter le temps de rétention desdites fumées de combustion à proximité de ladite partie chaude afin d'augmenter l'échange de chaleur entre lesdites fumées de combustion et ladite partie chaude.

7. Poêle (1) selon l'une ou plusieurs des revendications précédentes, **caractérisé en ce qu'**il comprend un ensemble d'aspiration (8) pour aspirer lesdites fumées de combustion.

8. Poêle (1) selon la revendication 7, **caractérisé en ce que** ledit ensemble d'aspiration (8) est du type électrique et est alimenté électriquement par au moins une source d'énergie étant choisie dans le groupe constitué par : une batterie électrique installée au sein dudit poêle (1), un réseau électrique étant extérieur au dit poêle (1) et lesdits moyens générateurs de courant électrique (11).

9. Poêle (1) selon l'une ou plusieurs des revendications précédentes, **caractérisé en ce qu'**il est du type à pellets.

10. Poêle (1) selon l'une ou plusieurs des revendications précédentes, **caractérisé en ce que** ledit moteur (10) à combustion externe est du type Stirling.
